# EUROPEAN PATENT SPECIFICATION

(11) **EP 2 870 856 B1**
(45) Date of publication and mention of the grant of the patent: **01.11.2017**
(21) Application number: 13425146.1
(22) Date of filing: 12.11.2013
(51) Int. Cl.: A01F 15/07, A01F 21/00

(54) **Bale wrapping apparatus and associated control device**
Ballenwickelvorrichtung und zugehörige Steuerungsvorrichtung
Appareil d'emballage de balles et dispositif de commande associé

(43) Date of publication of application: 13.05.2015
(73) Proprietor: Kverneland Group Ravenna S.r.l., 48026 Russi (RA) (IT)
(72) Inventor: Ravaglia, Paolo, 48012 Bagnacavallo RA (IT)
(74) Representative: Modiano, Micaela Nadia

(56) References cited:
- EP-A1- 0 865 722
- WO-A1-2013/034268
- GB-A- 2 463 008
- US-A- 5 042 225
- US-A1- 2003 089 081

## Description

The present invention relates to a bale wrapping apparatus and to the associated control device.

As is known, the storage of previously cut agricultural products, such as grass, wheat or hay, in bales having a definite shape, typically a cylindrical one, so as to be able to subsequently use them more easily, according to the specific requirements, is widespread.

According to one of the currently most widespread management methods (especially in central and northern Europe countries, and for moist agricultural products), the bale is wrapped completely with a film of polymeric material, which thus forms an enclosure such as to prevent any contact between the agricultural products and the external air.

This induces acidification of the vegetable mass by anaerobic microorganisms that are normally present in fields, and this anaerobic fermentation allows to obtain a product (known as silage) that is suitable for feeding farm animals, such as for example livestock.

Various types of wrapping machine are therefore used already to provide the complete wrapping of the bale; one of them is provided with a platform, on which the bale to be wrapped is rested and which, equipped appropriately, is capable of imparting a rotation to the bale about two mutually perpendicular axes.

Platforms of the type indicated above can be towed by a tractor (or other agricultural machine) or installed stably in the farmyard, but in any case, after placing the bale on said platform, the operator (usually by means of a remote control) can start the wrapping cycle simply by activating said rotation.

In this manner, in fact, while the bale rotates about said axes (typically by virtue of a hydraulic motor connected to an adapted kinematic system), it is possible to produce its complete wrapping by means of the film made of polymeric material, which can unwind from a reel that is arranged at the edge of the platform and is pulled by the bale itself.

Depending on the specific requirements, it is therefore possible to wrap the bale with any number at will of layers (usually, during wrapping, each flap of film is superimposed for at least 50% on the previously deposited flap), in any case until the desired complete isolation from the external environment of the bale and of the agricultural products that compose it is provided.

However, this constructive solution is not free from drawbacks.

The bale generally does not have a perfectly cylindrical shape and the density inside it also is not uniform due to various factors that the machine assigned to providing the packaging is unable to compensate, such as for example the irregularity of the swath, the driving style of the operator assigned to gathering the cut agricultural product, et cetera.

It is evident, moreover, that in this case the wrapping operation has a high degree of risk. Due to the irregular distribution of the masses of the bale, rotation induces on the bale forces with a direction that is different from the vertical axis, which therefore tend to destabilize the bale until it falls off the platform, with consequent damage to the wrapping machine itself and, far more severely, seriously endangering the safety of people who might be in the immediate facility (consider that the bale can weigh as much as one ton).

Sometimes, in order to obviate this drawback, the operator monitors the machine during wrapping, in order to reduce the rotation rate upon the occurrence of the slightest sign of danger (since he must act preventively because he is unable to assess the speed accurately), but even this solution is not satisfactory.

In fact, indeed because the nonuniformity conditions described above occur often, the productivity of the machine is penalized heavily, since it is necessary to force frequently the slowing described above (worse still, already at the slightest sign of danger).

Furthermore, the need to dedicate an operator to monitoring prevents said operator from being occupied with other activities (for example preparing the next bale to be wrapped), therefore reducing again the productivity level down to values that are often unacceptable.

US 5 042 225 A discloses an apparatus for wrapping bales having a combination of features as set forth in the pre-characterizing portion of the appended claim 1.

The aim of the present invention is to solve the problems described above, providing a wrapping apparatus that allows optimum and safe wrapping of a bale of grass, hay, wheat, forage and similar agricultural products.

Within the scope of this aim, an object of the invention is to provide a device that allows to control in an optimum and safe manner the wrapping process of a bale of grass, hay, wheat, forage and similar agricultural products.

Another object of the invention is to provide a wrapping apparatus that allows safer wrapping of the bale without requiring constant monitoring by an operator.

Another object of the invention is to provide a wrapping apparatus that ensures high reliability in operation and high productivity levels.

Another object of the invention is to provide a wrapping apparatus that can be obtained easily starting from commonly commercially available elements and materials.

Another object of the invention is to provide a wrapping apparatus that has modest costs and is safe in application.

In accordance with the invention, there is provided an apparatus for wrapping bales as defined in the appended claims.

Further characteristics and advantages of the invention will become better apparent from the description of two preferred but not exclusive embodiments of the wrapping apparatus (and of the control device) according to the invention, illustrated by way of nonlimiting example in the accompanying drawings, wherein:
Figure 1 is a perspective view of the wrapping apparatus according to the invention in the first embodiment, with a bale shown in broken lines;
Figure 2 is a perspective view of the wrapping apparatus according to the invention in the second embodiment, with some internal components shown in broken lines;

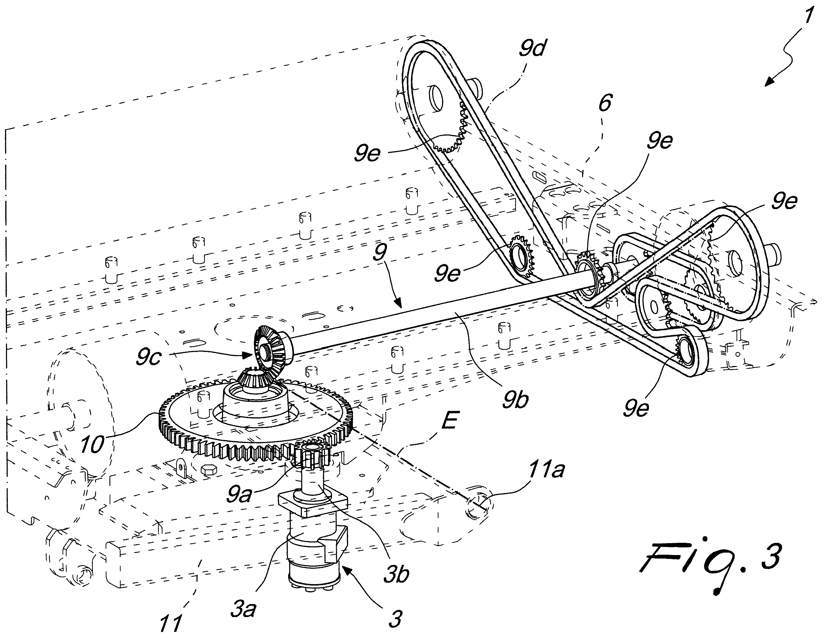

Figure 3 is a highly enlarged-scale perspective view of the internal components shown in broken lines in Figure 2.

With particular reference to the cited figures, the reference numeral 1 generally designates a bale wrapping apparatus, which comprises a supporting platform 2 for a bale A that is composed of previously cut agricultural products, such as grass, wheat, corn, hay, forage and the like.

Furthermore, the apparatus 1 comprises means 3 for moving the bale A, when it is arranged on the platform 2, according to at least two mutually perpendicular rotation axes B, C (one of which is perpendicular to the ground).

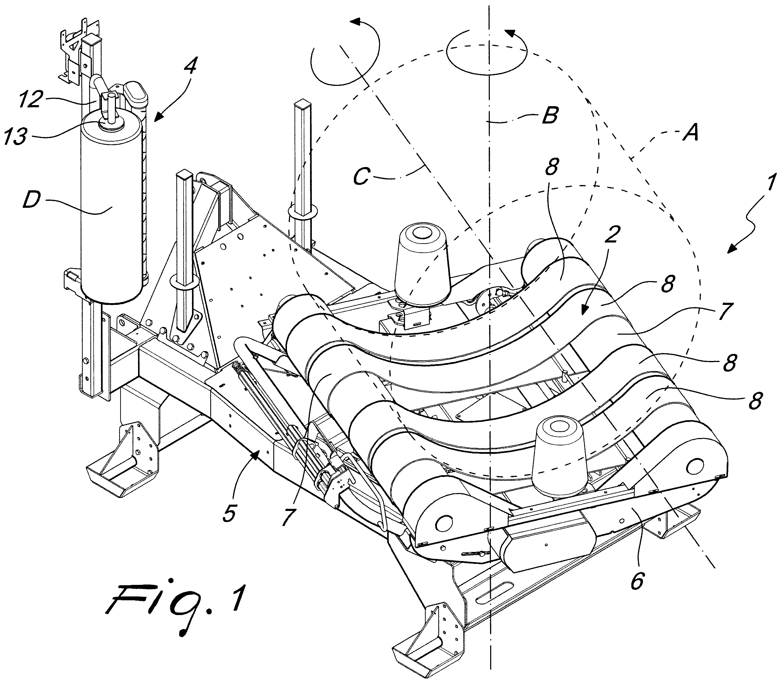

More precisely, as can be deduced from the accompanying Figure 1, the bale A can have an approximately cylindrical shape (albeit, as will be shown, with possible nonuniformities and/or irregularities) and can rest, in known manners, on the platform 2 at its lateral surface.

Moreover, in order to achieve the wrapping of the bale A as desired, at least one magazine 4 for feeding a covering element D, which can be wound automatically around the bale A during its (simultaneous) rotation about said rotation axes B, C, faces the platform 2 and is proximate thereto.

It should be noted right now that in the preferred application the apparatus 1 is intended to wrap the bale A with the covering element D (of which a possible example will be provided in the continuation of the present description), until it forms an enclosure that is capable of isolating completely from the outside environment the agricultural products of which the bale A is composed, preventing the exchange of air.

As is known, this result in fact allows to induce, by virtue of the microorganisms that are normally present in fields, the anaerobic fermentation of the agricultural products, until so-called silage is obtained, by means of which it is possible to feed farm animals, such as for example livestock.

However, although the procedure described above corresponds to the preferred application of the apparatus 1 according to the invention, it is useful to specify that the use of the latter in different fields and/or for different purposes is not excluded, as a function of the specific requirements, without thereby abandoning the protective scope claimed herein. Likewise, the apparatus 1 can also be used for bales A having different shapes.

According to the invention, the apparatus 1 comprises at least one sensor for the optionally indirect detection of the forces applied on at least one respective support of the bale A during its rotation.

The at least one sensor is controlled by an assembly for the control of the movement means 3, so as to be able to adjust the rotation rate of the bale A about the rotation axes B, C as a function of the force values detected by said sensor (or by said sensors). This allows therefore to be able to act promptly, even upon the onset of minimal anomalous stresses, due for example to an irregular distribution of masses, by reducing the speed and preventing unwanted movements of the bale A (and/or its fall from the platform 2) and in practice achieving straight away the intended aim.

It is specified right now that the number of sensors used (as well as their placement) may be any without thereby abandoning the protective scope claimed herein and can be chosen for example not only as a function of the shape of the apparatus 1 and of the number and type of the supports provided for the platform 2, but also so as to ensure a greater or smaller degree of precision and accuracy in the measurement of the forces (and therefore a more or less prompt and effective adjustment).

In particular, in a first embodiment (shown in Figure 1 by way of nonlimiting example of the application of the invention), the platform 2 is supported rotatably, about a first vertical rotation axis B, by a rigid supporting structure 5 that can be positioned stably on the ground.

According to this embodiment, therefore, the apparatus 1 can be installed in a substantially permanent manner, for example in a farmyard, and can wrap bales A that are transported to its immediate vicinity in various manners.

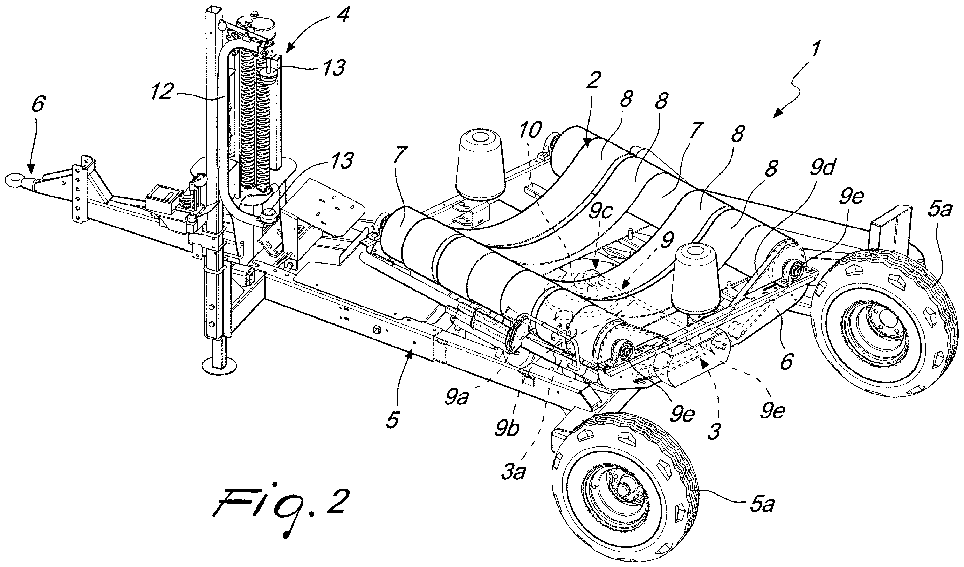

In a second embodiment, which is proposed in Figure 2 and does not exhaust the possible ways of carrying out the invention, the platform 2 is supported, so that it can rotate about the first vertical rotation axis B, by a rigid supporting structure 5, of which at least two ground resting elements are constituted by respective tires 5a, so as to allow to tow the platform 2 by means of a vehicle such as a tractor or the like.

This option allows to move the apparatus 1 by means of attractor (to which the supporting structure 5 can be coupled for example by means of a tow bar 6), to place it directly on the land where the bales A have been provided and/or are distributed, to then perform wrapping in manners that are similar to those provided for the preceding embodiment.

More particularly, according to a first constructive possibility, each sensor (regardless of whether the apparatus 1 has just one or has more) is constituted substantially by a load cell, which is coupled to the supporting structure 5, in order to control/measure the forces applied to respective supports of the platform 2 (and/or of the supporting structure 5) during the rotation of the bale A.

The cell can thus be used to detect an electrical signal that varies as a function of the load on a respective component of the support, said load being therefore correlated directly to the forces to which the component and the support are subjected during the movement of the bale A about the rotation axes B, C. Indirectly, therefore, each load cell is capable of detecting these forces and of transmitting the information related to their trend to the control assembly of the movement means 3 for the purposes already described.

In a second constructive possibility, each sensor (regardless of whether the apparatus 1 has just one or has more) is constituted substantially by a detector of the pressure of the air contained in a respective tire 5a, in order to control/measure the forces applied to said at least one tire 5a during the rotation of the bale A.

For example, therefore, the apparatus 1 can comprise a single pressure detector, associated with one of the two tires 5a, or can comprise two pressure detectors, each associated with a respective tire 5a (and the possibility is not excluded, moreover, to provide additional sensors, even of a different type, associated with other supports of the platform 2).

It is useful to specify that the constructive possibilities described in the preceding paragraphs have been introduced merely by way of nonlimiting example: the protective scope claimed herein in fact includes apparatuses 1 in which the detection sensors are of any type (and/or apparatuses 1 equipped with two or more different sensor types for the adjustment of the rotation rate of the same bale A), so long as they are suitable to detect the trend of the forces (and therefore the abnormal forces) applied to respective supports of the platform 2 (either directly or by measuring values associated with these forces).

Moreover, the sensors can be assigned to detecting forces applied directly to supports of the platform 2 or, as in the solution of Figure 2, to supports (the tires 5a) that are interposed between the supporting structure 5 and the ground (and therefore, indirectly, on supports of the platform 2).

In an embodiment of considerable practical interest, proposed in the accompanying figures by way of nonlimiting example of the application of the invention, the platform 2 comprises a first substantially rectangular (or square) perimetric frame 6, which supports rotatably two mutually opposite and parallel cylindrical rollers 7.

The rollers 7 are arranged substantially horizontally and can rotate about their own longitudinal axis; multiple mutually parallel bands 8 are then wound around said rollers 7 in a loop and support the bale A (which rests on said bands 8 at its lateral surface, as can be seen clearly from Figure 1).

The bands 8 are moved by the rollers 7 (typically by friction) so as to be able to move the bale A about the second rotation axis C, which is substantially horizontal and parallel to the longitudinal axes of the rollers 7.

Conveniently, the movement means 3 comprise a hydraulic motor 3a, which is functionally associated, by virtue of respective transmission means 9, with at least one of the rollers 7 and with a central supporting body. Said body is coupled, so that it can rotate about the first vertical rotation axis A, to the structure 5 and furthermore can support rigidly the first frame 6 of the platform 2.

By means of a single hydraulic motor 3 a, containing therefore significantly the structural complexity and the number of components involved, it is possible to obtain the combined movement of the bale A about the two rotation axes B, C.

More particularly, in the solution proposed in the accompanying figures merely by way of example the transmission means 9 comprise a first pinion 9a, which is coupled to the output shaft 3b of the hydraulic motor 3a and meshes with a first sprocket 10, which is integral with the first frame 6 of the platform 2 and constitutes the central supporting body, so as to first of all transfer to the platform 2 the rotary motion about the first vertical rotation axis B. Moreover, the transmission means 9 comprise an intermediate shaft 9b, which is turned by the first sprocket 10 by means of a bevel gear pair 9c and is associated, by means of a belt 9d wound around second sprockets 9e, with at least one roller 7, in order to actuate the movement thereof and of the bands 8 and therefore of the bale A about the second horizontal rotation axis C.

Positively, the motor 3a, the supporting body, the transmission means 9 and the platform 2 are supported by a second frame 11, which rotates partially about a horizontal tipping axis E in order to allow the partial inclination of the platform 2 and thus allow to unload onto the ground the bale A following completion of its wrapping.

In this embodiment, therefore, one or more detection sensors (for example load cells) are arranged at respective hinge pivots, which rotate about the tipping axis E and are inserted rigidly in respective slots 11a provided in the second frame 11. By arranging the sensors proximate to the platform 2, the measurement of the forces performed by said sensors is in fact more precise and accurate and therefore the adjustment of the rotation rate of the bale A is more effective.

Advantageously, the control assembly comprises an electronic controller and a hydraulic circuit, which is controlled by the controller and is connected to the hydraulic motor 3a in order to adjust the rotation rate of the bale A. By acquiring from the sensor (or sensors) the information related to the trend of the forces (and therefore of any abnormal forces) to which the supports of the platform 2 are subjected, the controller can thus adjust the rotation rate of the bale A (about the rotation axes B, C) in a practical manner by acting on the flow rate of oil within said hydraulic circuit.

More particularly, the apparatus 1 comprises at least two sensors and the electronic controller is provided with a module for the analysis and comparison of the force values detected by the sensors, in order to be able to process and calculate the trend over time of the values detected by each sensor, as well as the variations over time of the forces applied to each support and also the differences among the values detected by one of the sensors with respect to the values detected by another one of said sensors at each instant.

Thus, the controller can adjust the rotation rate of the bale A as a function of displacements and variations of the forces that exceed predefined parameters and can therefore indicate the onset of abnormal forces caused by an uneven distribution of the mass in the bale A (or to an irregular shape thereof) and such as to cause (if not contrasted) unwanted movements of the latter until it falls from the platform 2.

It should be specified, in any case, that the possibility to provide the controller with an analysis and comparison module even if the apparatus 1 has a single sensor is provided: in this case, in fact, the module can process and calculate the behavior over time of the force value detected by the single sensor and the corresponding variations over time, in order to adjust in any case the rotation rate of the bale A as a function of deviations and variations exceeding preset parameters.

In the constructive solutions proposed in the accompanying figures by way of nonlimiting example of the application of the invention, the supply magazine 4 comprises a bracket 12, which is supported by the structure 5 proximate to the platform 2 and is C-shaped. Said bracket 12 has two end protrusions 13, which are aligned vertically (and mutually opposite): the two protrusions 13 thus form, on opposite sides, a stable abutment for the core of a reel of film made of polymeric material, which can thus constitute the covering element D. The film can thus unwind automatically and progressively from the reel during the rotation of the bale A about the two rotation axes B, C for the complete wrapping of the latter.

It should be noted that the choice to resort to a covering element D constituted by a film of polymeric material corresponds to the preferred application of the invention, but the use of covering elements D of a different type (a net or others, for example) and/or made of a different material is not excluded without thereby abandoning the protective scope claimed herein.

The present description also relates to a control device for bale wrapping apparatuses, which comprise, as described, a supporting platform 2 for a bale A composed of previously cut agricultural products, such as grass, wheat, corn, hay, forage and the like. Furthermore, the apparatus 1 comprises means 3 for moving the bale A, when it is arranged on the platform 2, along at least two mutually perpendicular rotation axes B, C, and at least one magazine 4 for supplying a covering element D, which can be wrapped automatically around the bale A, during its rotation about the rotation axes B, C in order to wrap it, faces the platform 2 and is proximate thereto.

According to the invention, the control device therefore comprises at least one sensor for the optionally indirect detection of the forces applied to at least one respective support of the bale A during its rotation. Said at least one sensor is thus controlled by an assembly for controlling the movement means 3, in order to adjust the rotation rate of the bale A about the rotation axes B, C as a function of the force values detected by said sensor (or by said sensors).

The operation of the wrapping apparatus (and of the control device) according to the invention is as follows.

As shown, it is possible to arrange on the platform 2 a bale A (resting it in various manners on the bands 8 at its lateral surface) in order to wrap it with a covering element D, for example of the type of a film made of polymeric material.

In order to allow the complete wrapping of the bale A by means of the film, which is necessary for example to ensure the complete insulation of the agricultural products that compose said bale A, from the air and in general from the external environment, the bale A is then made to rotate simultaneously by the movement means 3 about the first vertical rotation axis B and about the second horizontal rotation axis C.

During rotation, in fact, an end flap of the film is pulled by said bale A, with which it is rendered integral, thus causing the unwinding of the film from the reel and its progressive wrapping.

After performing a number of turns that can be preset at will (and indeed corresponds to the complete wrapping of the bale A, optionally, if necessary, with multiple superimposed layers of film or of another covering element D), rotation is stopped and the bale A can thus be evacuated from the platform 2 (for example, as shown, by partially rotating the second frame 11 about the tipping axis E to tilt the platform 2 with respect to the ground and make the bale A slide to the ground laterally to said platform 2 by gravity).

During wrapping, by virtue of the presence of the sensor or sensors and of the control assembly that controls them, the rotation rate of the bale A about the rotation axes B, C can be constantly controlled and kept at the maximum possible value (i.e., insofar as allowed by the specific shape of the bale A).

If the bale A in fact has indeed a (perfectly) cylindrical shape and a substantially uniform distribution of the mass of agricultural products, the control assembly can make the movement means 3 rotate the bale A at its maximum speed, which is indeed chosen by design, assuming that these conditions of the bale A are verified.

When instead, as often occurs, the bale A has shape irregularities and/or an uneven distribution of the mass of agricultural products that compose it (usually due to problems links to its forming process), the controller, by virtue of the sensors, is capable of detecting this condition promptly. The choice to arrange one or more sensors at respective supports of the platform 2 in fact allows to detect immediately the onset of abnormal forces (directed along directions that are different from the vertical one), which are indeed due to an imperfect and uneven shape of the bale A.

In this case, the controller can slow immediately the rotation rate about the rotation axes B, C, avoiding the risk of unwanted movements of the bale A (and preventing the danger that it might be thrown far from the platform 2, with obvious damage and danger for the integrity of property and most of all people).

With the apparatus 1 according to the invention it is possible to maintain the maximum possible speed (of rotation of the bale A and therefore of completion of each wrapping cycle), since the control assembly is capable of slowing automatically the rotation rate only when the first signs of anomaly (of unwanted forces/stresses, a consequence of irregular bales A) occur.

This result is achieved without resorting to an operator, called to monitor constantly the wrapping process, thus allowing to assign said operator to other useful tasks.

It should be noted furthermore that the response of the control assembly to the onset of abnormal forces is certainly swifter and more precise than any operator that might be called to monitor manually the wrapping. The operator in fact cannot assess accurately the speed at which the bale A can rotate safely and cannot immediately realize the onset of abnormal forces and therefore can only reduce the speed significantly when the bale A starts moving dangerously.

Vice versa, by virtue of the constant monitoring of the trend of the forces, performed by the sensors, the controller can act promptly and lower progressively the speed only by the amount needed to find the optimum value, which is different in each instance and is a function of the specific problems caused by the shape of each bale A.

The apparatus 1 (and the control device) can thus provide a controlled wrapping of the bale A in the shortest possible time while working in maximum safety.

This result is achieved without resorting to any operator but without renouncing high reliability in operation and high productivity levels.

In practice it has been found that the wrapping apparatus (and the control device) according to the invention achieve fully the intended aim, since resorting to at least one sensor for detecting the forces applied to at least one respective support of the bale during its rotation, said sensor being controlled by an assembly for controlling the movement means of said bale, allows to adjust the rotation rate as a function of the stress values that are detected and therefore to provide a wrapping apparatus that allows optimum and safe wrapping of a bale of grass, hay, wheat, forage and similar agricultural products.

The invention thus conceived is susceptible of numerous modifications and variations, all of which are within the scope of the appended claims. In the examples of embodiment shown, individual characteristics, given in relation to specific examples, may actually be interchanged with other different characteristics that exist in other examples of embodiment.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for wrapping bales, comprising a supporting platform (2) for a bale (A) composed of previously cut agricultural products, such as grass, wheat, corn, hay, forage and the like, and movement means (3) for moving the bale (A), when it is placed on said platform (2), according to at least two mutually perpendicular rotation axes (B, C), at least one magazine (4) for supplying a covering element (D) that can be wound automatically around the bale (A), during its rotation about said rotation axes (B, C), for its wrapping, facing said platform (2) and being proximate thereto, **characterized in that** it comprises at least one sensor for the optionally indirect detection of the forces applied to at least one respective support of the bale (A) during its rotation, said at least one sensor being controlled by an assembly for the control of said movement means (3), in order to adjust the rotation rate of the bale (A), about said rotation axes (B, C), as a function of the force values detected by said at least one sensor.

2. The wrapping apparatus according to claim 1, **characterized in that** said platform (2) is supported, so that it can rotate about a first said rotation axis (B), which is vertical, by a rigid supporting structure (5), which can be positioned stably on the ground.

3. The wrapping apparatus according to claim 1, **characterized in that** said platform (2) is supported rotatably, about a first said rotation axis (B), which is vertical, by a rigid supporting structure (5), at least two ground resting elements of said rigid supporting structure (5) being constituted by respective tires (5a), to move said platform (2) by means of a vehicle such as a tractor or the like.

4. The wrapping apparatus according to claim 2, **characterized in that** said at least one sensor is constituted substantially by a load cell, which is coupled to said rigid supporting structure (5), to monitor the forces applied on at least one respective support of said platform (2) during the rotation of the bale (A).

5. The wrapping apparatus according to claim 3, **characterized in that** said at least one sensor is constituted substantially by a detector of the pressure of the air contained in a respective said tire (5a), in order to monitor the forces applied to at least one of said tires (5a) during the rotation of the bale (A).

6. The wrapping apparatus according to one or more of the preceding claims 2 to 5, **characterized in that** said platform (2) comprises a first substantially rectangular perimetric frame (6), which supports rotatably two mutually parallel and opposite cylindrical rollers (7), which are arranged substantially horizontally and so that they can rotate about their own longitudinal axis, multiple mutually parallel bands (8) for supporting the bale (A) being wrapped in loop around said rollers (7), said bands (8) being moved by said rollers (7) for the movement of the bale (A) about a second said rotation axis (C), which is substantially horizontal and parallel to said longitudinal axes of said rollers (7).

7. The wrapping apparatus according to claim 6, **characterized in that** said movement means (3) comprise a hydraulic motor (3a) which is associated functionally, by virtue of respective transmission means (9), with at least one of said rollers (7) and with a central supporting body that is coupled rotatably, about said first vertical rotation axis (A), to said rigid supporting structure (5) and supports rigidly said first frame (6) of said platform (2), for the combined movement of the bale (A), about said two rotation axes (B, C), by virtue of said hydraulic motor (3a).

8. The wrapping apparatus according to claim 7, **characterized in that** said transmission means (9) comprise a first pinion (9a), which is coupled to the output shaft (3b) of said hydraulic motor (3a) and meshes with a first sprocket (10), which is integral with said first frame (6) of said platform (2) and constitutes said central supporting body, said transmission means (9) comprising an intermediate shaft (9b), which is rotated by said first sprocket (10) by means of a bevel gear pair (9c) and is associated, by means of at least one belt (9d), wound around second sprockets (9e), with said at least one roller (7).

9. The wrapping apparatus according to claim 8, **characterized in that** said motor (3a), said supporting body, said transmission means (9) and said platform (2) are supported by a second frame (11), which rotates partially about a horizontal tipping axis (E), for the partial inclination of said platform (2) and the unloading of the bale (A) onto the ground following the completion of its wrapping.

10. The wrapping apparatus according to claim 9, **characterized in that** said at least one detection sensor is arranged at at least one respective hinge pivot, which rotates about said tipping axis (E) and is inserted rigidly in respective slots (11a) provided in said second frame (11).

11. The wrapping apparatus according to claim 10, **characterized in that** said control assembly comprises an electronic controller and a hydraulic circuit, which is controlled by said controller and is connected to said hydraulic motor (3a), to adjust the rotation rate of the bale (A) by means of the adjustment, on the part of said controller, of the flow rate of oil within said hydraulic circuit.

12. The wrapping apparatus according to one or more of the preceding claims, **characterized in that** it comprises at least two of said sensors, said electronic controller being provided with a module for the analysis and comparison of the force values detected by said sensors, in order to process and calculate the trend over time of the values detected by each one of said sensors, the corresponding variations over time and the differences between the values detected by one of said sensors and the values detected by another one of said sensors, in order to adjust the rotation rate of the bale (A) as a function of displacements and variations that exceed predefined parameters.

13. The wrapping apparatus according to one or more of the preceding claims 4 and 5, **characterized in that** said supply magazine (4) comprises a bracket (12), which is supported by said rigid supporting structure (5) proximate to said platform (2) and is C-shaped, said bracket (12) being provided with two end protrusions (13), which are aligned vertically and form on opposite sides a stable abutment for the core of a reel of film made of polymeric material, which constitutes the covering element (D), and unwinds automatically and progressively from the reel, during the rotation of the bale (A) about said two rotation axes (B, C), for its complete wrapping.

## Patentansprüche

1. Eine Vorrichtung zum Einwickeln von Ballen, die Folgendes umfasst: eine tragende Plattform (2) für einen Ballen (A), der aus zuvor geschnittenen landwirtschaftlichen Produkten, wie zum Beispiel Gras, Weizen, Mais, Heu, Futter und dergleichen besteht, und Bewegungsmittel (3) zum Bewegen des Ballens (A), wenn er auf die Plattform (2) platziert ist, um mindestens zwei zueinander rechtwinklige Drehachsen (B, C), mindestens ein Magazin (4) zum Zuführen eines Abdeckelements (D), das automatisch während seiner Drehung um die Drehachsen (B, C) um den Ballen (A) gewickelt werden kann, zum Zwecke seines Einwickelns, der Plattform (2) zugewandt und in ihrer Nähe; **dadurch gekennzeichnet, dass** sie mindestens einen Sensor für die fakultativ indirekte Erfassung der Kräfte umfasst, die auf mindestens einen entsprechenden Träger des Ballens (A) während seiner Drehung einwirken, wobei der mindestens eine Sensor von einem Aufbau für die Steuerung der Bewegungsmittel (3) gesteuert wird, um die Rotationsrate des Ballens (A) um die Drehachsen (B, C) in Abhängigkeit von den Kräftewerten anzupassen, die von dem mindestens einen Sensor erfasst werden.

2. Die Wickelvorrichtung gemäß Anspruch 1, **dadurch gekennzeichnet, dass** die Plattform (2) drehbar um die erste Drehachse (B), die vertikal ist, von einer starren tragenden Struktur (5) getragen wird, die fest auf dem Boden positioniert werden kann.

3. Die Wickelvorrichtung gemäß Anspruch 1, **dadurch gekennzeichnet, dass** die Plattform (2) drehbar um die erste Drehachse (B), die vertikal ist, von einer starren tragenden Struktur (5) getragen wird, wobei mindestens zwei Bodenauflageelemente der starren tragenden Struktur (5) aus entsprechenden Reifen (5a) bestehen, um die Plattform (2) mit Hilfe eines Fahrzeugs, wie zum Beispiel eines Traktors oder dergleichen, zu bewegen.

4. Die Wickelvorrichtung gemäß Anspruch 2, **dadurch gekennzeichnet, dass** der mindestens eine Sensor im Wesentlichen aus einer Wägezelle besteht, die mit der starren tragenden Struktur (5) gekoppelt ist, um die Kräfte zu messen, die während der Drehung des Ballens (A) auf mindestens einen entsprechenden Träger der Plattform (2) einwirken.

5. Die Wickelvorrichtung gemäß Anspruch 3, **dadurch gekennzeichnet, dass** der mindestens eine Sensor im Wesentlichen aus einem Detektor für den Druck der Luft besteht, die in dem jeweiligen Reifen (5a) enthalten ist, zur Überwachung der Kräfte, die während der Drehung des Ballens (A) auf mindestens einen der Reifen (5a) einwirken.

6. Die Wickelvorrichtung gemäß einem oder mehreren der obigen Ansprüche 2 bis 5, **dadurch gekennzeichnet, dass** die Plattform (2) einen ersten im Wesentlichen rechteckigen Umfangsrahmen (6) umfasst, der drehbar zwei zueinander parallele und gegenüberliegende Zylinderrollen (7) trägt, welche im Wesentlichen horizontal und so angeordnet sind, dass sie sich um ihre eigene Längsachse drehen können, wobei mehrere zueinander parallele Bänder (8) zum Tragen des Ballens (A) in Schlaufen um die Rollen (7) gewickelt sind, wobei die Bänder (8) von den Rollen (7) bewegt werden zum Zwecke der Bewegung des Ballens (A) um die zweite Drehachse (C), die im Wesentlichen horizontal und parallel zu den Längsachsen der Rollen (7) ist.

7. Die Wickelvorrichtung gemäß Anspruch 6, **dadurch gekennzeichnet, dass** die Bewegungsmittel (3) einen Hydraulikmotor (3a) umfassen, der funktionell, über entsprechende Übertragungsmittel (9), mit mindestens einer der Rollen (7) und mit einem zentralen tragenden Körper verbunden ist, welcher drehbar um die erste vertikale Drehachse (A) mit der starren tragenden Struktur (5) gekoppelt ist und den ersten Rahmen (6) der Plattform (2) starr stützt, zum Zwecke der kombinierten Bewegung des Ballens (A) um die beiden Drehachsen (B, C) durch den Hydraulikmotor (3a).

8. Die Wickelvorrichtung gemäß Anspruch 7, **dadurch gekennzeichnet, dass** die Übertragungsmittel (9) ein erstes Ritzel (9a) umfassen, welches mit der Abtriebswelle (3b) des Hydraulikmotors (3a) gekoppelt ist und mit einem ersten Kettenrad (10) in Eingriff steht, das integral mit dem ersten Rahmen (6) der Plattform (2) ist und den zentralen tragenden Körper bildet, wobei die Übertragungsmittel (9) eine Zwischenwelle (9b) umfassen, die von dem ersten Kettenrad (10) über ein Kegelradgetriebe (9c) gedreht wird und über mindestens einen Riemen (9d), der um zweite Kettenräder (9e) gelegt ist, mit der mindestens einen Rolle (7) verbunden ist.

9. Die Wickelvorrichtung gemäß Anspruch 8, **dadurch gekennzeichnet, dass** der Motor (3a), der tragende Körper, die Übertragungsmittel (9) und die Plattform (2) von einem zweiten Rahmen (11) getragen werden, der sich teilweise um eine horizontale Kippachse (E) dreht, zur partiellen Neigung der Plattform (2) und zum Abladen des Ballens (A) auf den Boden nach Abschluss seines Wickelvorgangs.

10. Die Wickelvorrichtung gemäß Anspruch 9, **dadurch gekennzeichnet, dass** der mindestens eine Erfassungssensor an mindestens einem entsprechenden Drehzapfen angeordnet ist, welcher sich um die Kippachse (E) dreht und fest in entsprechende Schlitze (11a) eingeführt ist, die in dem zweiten Rahmen (11) angebracht sind.

11. Die Wickelvorrichtung gemäß Anspruch 10, **dadurch gekennzeichnet, dass** die Steuerungsvorrichtung eine elektronische Steuerung und einen Hydraulikkreis umfasst, der von der Steuerung gesteuert wird und mit dem Hydraulikmotor (3a) verbunden ist, um die Rotationsrate des Ballens (A) mit Hilfe der durch die Steuerung vorgenommenen Einstellung der Durchflussgeschwindigkeit von Öl in dem Hydraulikkreis anzupassen.

12. Die Wickelvorrichtung gemäß einem oder mehreren der obigen Ansprüche, **dadurch gekennzeichnet, dass** sie mindestens zwei der Sensoren umfasst, wobei die elektronische Steuerung mit einem Modul für die Analyse und den Vergleich der Kräftewerte ausgestattet ist, die von den Sensoren erfasst werden, um den Verlauf über die Zeit der Werte, die von jedem der Sensoren erfasst werden, die entsprechenden Schwankungen über die Zeit und die Unterschiede zwischen den Werten, die von einem der Sensoren erfasst werden, und den Werten, die von einem anderen der Sensoren erfasst werden, zu verarbeiten und zu berechnen, um die Rotationsrate des Ballens (A) in Abhängigkeit von Verschiebungen und Abweichungen, die vordefinierte Parameter überschreiten, anzupassen.

13. Die Wickelvorrichtung gemäß einem oder mehreren der obigen Ansprüche 4 und 5, **dadurch gekennzeichnet, dass** das Nachschubmagazin (4) einen Bügel (12) umfasst, der von der starren tragenden Struktur (5) nahe der Plattform (2) getragen wird und C-förmig ist, wobei der Bügel (12) mit zwei Endvorsprüngen (13) versehen ist, die vertikal ausgerichtet sind und auf gegenüberliegenden Seiten ein stabiles Widerlager für den Kern einer Spule von Film aus Polymermaterial bilden, der das Abdeckelement (D) bildet und sich während der Drehung des Ballens (A) um die zwei Drehachsen (B, C) zum Zwecke seines vollständigen Einwickelns automatisch und fortschreitend von der Spule abwickelt.

## Revendications

1. Appareil pour envelopper des balles, comprenant une plateforme de support (2) pour une balle (A) constituée par des produits agricoles coupés au préalable, tels que de l'herbe, du blé, du maïs, du foin, du fourrage, et analogue, et des moyens de déplacement (3) pour déplacer la balle (A), lorsqu'elle est disposée sur ladite plateforme (2) selon au moins deux axes de rotation mutuellement perpendiculaires (B, C), au moins un magasin (4) pour délivrer un élément de revêtement (D) qui peut être enroulé automatiquement autour de la botte (A) durant sa rotation autour desdits axes de rotation (B, C), pour son enveloppement, faisant face à ladite plateforme (2) et proche de celle-ci, **caractérisé en ce qu'**il comprend au moins un capteur pour la détection indirecte optionnelle des forces appliquées à au moins un support respectif de la balle (A) durant sa rotation, ledit au moins un capteur étant commandé par un ensemble pour la commande desdits moyens de déplacement (3), de façon à ajuster la vitesse de rotation de la balle (A), autour desdits axes de rotation (B, C), en fonction des valeurs de force détectées par ledit au moins un capteur.

2. Appareil d'enveloppement selon la revendication 1, **caractérisé en ce que** ladite plateforme (2) est supportée, de telle sorte qu'elle puisse tourner autour d'un premier desdits axes de rotation (B), qui est vertical, par une structure de support rigide (5), qui peut être positionnée de façon stable sur le sol.

3. Appareil d'enveloppement selon la revendication 1, **caractérisé en ce que** ladite plateforme (2) est supportée de façon à pouvoir tourner, autour d'un premier desdits axes de rotation (B), qui est vertical, par une structure de support rigide (5), au moins deux éléments de repos au sol de ladite structure de support rigide (5) étant constitués par des pneumatiques respectifs (5a), de façon à déplacer ladite plateforme (2) à l'aide d'un véhicule tel qu'un tracteur, ou analogue.

4. Appareil d'enveloppement selon la revendication 2, **caractérisé en ce que** ledit au moins un capteur est sensiblement constitué par une cellule de charge, qui est couplée à ladite structure de support rigide (5), de façon à contrôler les forces appliquées sur au moins un support respectif de ladite plateforme (2) durant la rotation de la balle (A).

5. Appareil d'enveloppement selon la revendication 3, **caractérisé en ce que** ledit au moins un capteur est sensiblement constitué par un détecteur de la pression de l'air contenu dans un pneumatique respectif desdits pneumatiques (5a), de façon à contrôler les forces appliquées à au moins l'un desdits pneumatiques (5a) durant la rotation de la balle (A).

6. Appareil d'enveloppement selon l'une ou plusieurs des revendications 2 à 5 qui précèdent, **caractérisé en ce que** ladite plateforme (2) comprend un premier châssis périphérique sensiblement rectangulaire (6), qui supporte de manière rotative deux rouleaux cylindriques mutuellement parallèles et opposés (7), qui sont disposés sensiblement horizontalement et de telle sorte qu'ils puissent tourner autour de leur propre axe longitudinal, de multiples bandes mutuellement parallèles (8) pour supporter la balle (A) étant enroulées en boucle autour desdits rouleaux (7), lesdites bandes (8) étant déplacées par lesdits rouleaux (7) pour le déplacement de la balle (A) autour d'un deuxième desdits axes de rotation (C), qui est sensiblement horizontal et parallèle auxdits axes longitudinaux desdits rouleaux (7).

7. Appareil d'enveloppement selon la revendication 6, **caractérisé en ce que** lesdits moyens de déplacement (3) comprennent un moteur hydraulique (3a) qui est associé de façon fonctionnelle, à l'aide de moyens de transmission respectifs (9), à au moins l'un desdits rouleaux (7) et à un corps de support central qui est couplé de façon à pouvoir tourner, autour dudit premier axe de rotation vertical (A), à ladite structure de support rigide (5) et qui supporte de façon rigide ledit premier châssis (6) de ladite plateforme (2), pour le déplacement combiné de la balle (A), autour desdits deux axes de rotation (B, C), à l'aide dudit moteur hydraulique (3a).

8. Appareil d'enveloppement selon la revendication 7, **caractérisé en ce que** lesdits moyens de transmission (9) comprennent un premier pignon (9a), qui est couplé à l'arbre de sortie (3b) dudit moteur hydraulique (3a) et qui s'engrène avec une première roue dentée (10), qui est intégrée audit premier châssis (6) de ladite plateforme (2) et qui constitue ledit corps de support central, lesdits moyens de transmission (9) comprenant un arbre intermédiaire (9b), qui est amené à tourner par ladite première roue dentée (10) à l'aide d'une paire d'engrenages coniques (9c) et qui est associé, à l'aide d'au moins une courroie (9d), enroulée autour de deuxièmes roues dentées (9e), audit au moins un rouleau (7).

9. Appareil d'enveloppement selon la revendication 8, **caractérisé en ce que** ledit moteur (3a), ledit corps de support, lesdits moyens de transmission (9) et ladite plateforme (2) sont supportés par un deuxième châssis (11), qui tourne partiellement autour d'un axe d'inclinaison horizontal (E), pour l'inclinaison partielle de ladite plateforme (2) et le déchargement de la balle (A) sur le sol après l'achèvement de son enveloppement.

10. Appareil d'enveloppement selon la revendication 9, **caractérisé en ce que** ledit au moins un capteur de détection est disposé au niveau d'au moins un pivot d'articulation respectif, qui tourne autour dudit axe d'inclinaison (E) et qui est inséré de façon rigide dans des fentes respectives (11a) réalisées dans ledit deuxième châssis (11).

11. Appareil d'enveloppement selon la revendication 10, **caractérisé en ce que** ledit ensemble de commande comprend un dispositif de commande électronique et un circuit hydraulique, qui est commandé par ledit dispositif de commande et qui est relié audit moteur hydraulique (3a), de façon à ajuster la vitesse de rotation de la balle (A) à l'aide de l'ajustement, de la part dudit dispositif de commande, du débit d'écoulement d'huile à l'intérieur dudit circuit hydraulique.

12. Appareil d'enveloppement selon l'une ou plusieurs des revendications précédentes, **caractérisé en ce qu'**il comprend au moins deux desdits capteurs, ledit dispositif de commande électronique étant muni d'un module pour l'analyse et la comparaison des valeurs de force détectées par lesdits capteurs, de façon à traiter et à calculer la tendance au cours du temps des valeurs détectées par chacun desdits capteurs, les variations correspondantes au cours du temps et les différences entre les valeurs détectées par l'un desdits capteurs et les valeurs détectées par un autre desdits capteurs, de façon à ajuster la vitesse de rotation de la balle (A) en fonction de déplacements et de variations qui dépassent des paramètres prédéfinis.

13. Appareil d'enveloppement selon l'une ou plusieurs des revendications 4 et 5 précédentes, **caractérisé en ce que** ledit magasin de fourniture (4) comprend un étrier (12), qui est supporté par ladite structure de support rigide (5) à proximité de ladite plateforme (2) et qui est en forme de C, ledit étrier (12) étant muni de deux saillies d'extrémité (13), qui sont alignées verticalement et qui forment sur des côtés opposés une butée stable pour le coeur d'un rouleau de film réalisé en matériau polymère, lequel constitue l'élément de revêtement (D), et se déroulant automatiquement et progressivement à partir du rouleau, durant la rotation de la balle (A) autour desdits deux axes de rotation (B, C), pour son enveloppement complet.
